# EUROPÄISCHE PATENTANMELDUNG

(11) **EP 1 217 869 A2**
(43) Veröffentlichungstag der Anmeldung: **26.06.2002**
(21) Anmeldenummer: 01440415.6
(22) Anmeldetag: 10.12.2001
(51) Int. Cl.: H04Q 11/04, H04Q 11/00

(54) **Optischer Crossconnect zum wahlfreien Verschalten von Nachrichtensignalen unterschiedlicher Multiplexebenen**

(30) Priorität: 23.12.2000 DE 10064990
(71) Anmelder: ALCATEL, 75008 Paris (FR)
(72) Erfinder: Beisel, Werner, 71638 Ludwigsburg (DE); Wettengel, Heinz, 71254 Ditzingen (DE); Hägele, Volker, Dr., 71384 Schorndorf (DE)
(74) Vertreter: Urlichs, Stefan, Dipl.-Phys.

(57) **Zusammenfassung**

Ein optischer Crossconnect (OCX), der zum Schalten sogenannter Optical Channels unterschiedlicher Multiplexebenen mit jeweils festgelegter Bitrate ausgebildet ist besitzt eine Anzahl von Eingangs/Ausgangs-Anschlüssen (I/O) die jeweils angepaßt sind, Nachrichtensignale einer bestimmten Multiplexebene zu senden und zu empfangen, und eine mit den Eingangs/Ausgangs-Anschlüssen (I/O) verbundenen Schaltmatrix (S). Die Schaltmatrix S ist eine für Nachrichtensignale aller Multiplexebenen transparente Raumschaltmatrix. Um die Zusammenarbeit zwischen den einzelnen Multiplexebenen herzustellen, besitzt der Crossconnect (OCX) zumindest einen ebenfalls mit der Schaltmatrix (S) verbundenen Multiplexer (MUX). Dieser ist angepaßt, eine Anzahl von der Schaltmatrix (S) empfangener Nachrichtensignale einer niedrigeren Multiplexebene zu einem Nachrichtensignal einer höheren Multiplexebene zu multiplexen und dieses an die Schaltmatrix (S) zurückzuleiten, sowie ein von der Schaltmatrix (S) empfangenes Nachrichtensignal der einer höheren Multiplexebene in eine Anzahl Nachrichtensignale einer niedrigeren Multiplexebene zu demultiplexen und diese einzeln an die Schaltmatrix (S) zurückzuleiten.

## Beschreibung

Die Erfindung betrifft einen optischen Crossconnect zum Schalten von Verbindungen in einem optischen Übertragungsnetz, in dem optische Nachrichtensignale unterschiedlicher Multiplexebenen mit jeweils festgelegter Bitrate gesendet werden können, wobei Nachrichtensignale einer höheren Multiplexebene aus Nachrichtensignalen einer niedrigeren Multiplexebene zusammengesetzt sind oder direkt ein Nutzdatensignal enthalten.

In der optischen Nachrichtenübertragung werden derzeit synchrone optische Systeme eingesetzt, die in Europa als SDH (synchrone digitale Hierarchie) und in Nordamerika als SONET (synchronous optical network) bekannt sind. Bei diesen Systeme sind Nachrichtensignale unterschiedlicher Hierarchieebenen definiert, wobei Nachrichtensignale einer höheren Multiplexebene aus Nachrichtensignalen einer niedrigeren Multiplexebene zusammengesetzt sind oder direkt ein Nutzdatensignal enthalten. Die Multiplexhierarchie dieser Systeme ist in ITU-T G.707 Kapitel 6 definiert. Ein Überblick über diese Systeme wird z.B. in dem Artikel "SONET 101" der Fa. Nortel Networks dargestellt, der im Internet unter www.nortel.com/broadband/pdf/sonet 101.pdf heruntergeladen werden kann.

In optischen Nachrichtenübertragungsnetzen werden Crossconnects eingesetzt, deren Aufgabe es ist, Pfade in dem Netz einzurichten. Dazu ist es erforderlich Multiplexeinheiten von jedem Eingang auf jeden Ausgang schalten zu können. Es sind sogenannte 4/3/1 Crossconnects wie z.B. der 1641SX der Firma Alcatel bekannt, die Multiplexeinheiten aller Hierarchieebenen (VC-4, VC3, VC-12 bei SDH) von jedem Eingang auf jeden Ausgang schalten können. Daneben gibt es noch sogenannte 4/4 Crossconnects wie z.B. den 1664SX der Fa. Alcatel, die dafür angepaßt sind, lediglich Multiplexeinheiten der höchsten Hierarchieebene (bei SDN VC-4) zu schalten. Kernstück dieser Crossconnects ist eine Raum/Zeit-Schaltmatrix, die mit allen Eingangs/Ausgangs-Anschlüssen verbunden ist. Bei den bekannten Systemen ist diese Schaltmatrix als dreistufige elektrische Schaltmatrix nach Clos ausgeführt (siehe Clos, "A Study of Non-Blocking Switching Networks", B.S.T.J. No. 32, 1953, pp. 406-424).

Daneben werden derzeit sogenannte optische Crossconnects entwickelt, die optische Nachrichtensignale beliebigen Formates wie SONET, ATM, IP schalten sollen. Sie enthalten eine zentrale Raum-Schaltmatrix, die für die zu schaltenden Nachrichtensignale transparent sein soll. Ein Beispiel für einen solchen optischen Crossconnect ist in dem Artikel "Cost Effective Optical Networks: The Role of Optical Cross-Connects" von Charles A. Brackett angegeben, der im Internet von der Site www.tellium.com heruntergeladen werden kann.

Neuere Entwicklungen in der optischen Nachrichtenübertragung zielen darauf ab, Nachrichtensignale immer höherer Bitrate zu übertragen. So wird derzeit über eine neue Multiplexhierarchie mit der Bezeichnung "Optical Channel (OCh)" diskutiert. Diese neue Multiplexhierarchie soll Multiplexebenen mit Bitraten von 2,66 Gbit/sec sowie Vielfache davon (Faktor vier), nämlich 10,7x Gbit/sec und 43,x Gbit/sec aufweisen. Die zukünftigen Optical Channels sind besonders für die optische Nachrichtenübertragung im Wellenlängenmultiplex (WDM) vorgesehen.

Für diese Optical Channels werden ebenfalls Crossconnects benötigt, die Nachrichtensignale aller Hierarchieebenen von jedem Eingang zu jedem Ausgang schalten können. Für die Schaltmatrix solcher Crossconnects ist der Ansatz mit dreistufiger elektrischer Raum/Zeit-Matrix nach Clos aufgrund der hohen Bitrate mit vertretbarem Auswand nicht realisierbar. Optische Crossconnects mit transparenter Raum-Schaltmatrix hingegen sind nicht in der Lage, Anschlüsse für Nachrichtensignale einer höheren Multiplexebene mit Anschlüssen für Nachrichtensignale einer niedrigeren Multiplexebene zu verbinden. Anderseits sind solche optischen Crossconnects für die neuen Optical Channels bei weitem nicht kosteneffektiv.

Eine Aufgabe der Erfindung besteht deshalb darin, einen Crossconnect für Optical Channels anzugeben, der volle Konnetktivität für Nachrichtensignale aller Multiplexebenen unterstützt. Eine weitere Aufgabe der Erfindung besteht darin, ein Verfahren zum Schalten von Optical Channels unterschiedlicher Multiplexebenen anzugeben.

Die Aufgabe wird hinsichtlich des Crossconnects gelöst durch die Merkmale des Anspruchs 1 und hinsichtlich des Verfahrens durch die Merkmale des Anspruchs 7. Vorteilhafte Ausgestaltungen sind den abhängigen Ansprüchen zu entnehmen.

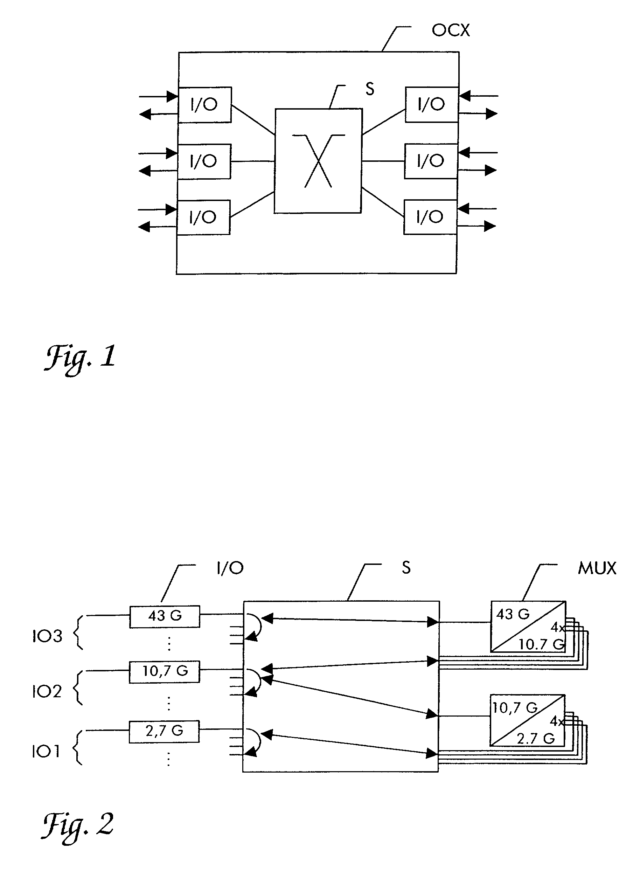

Im folgenden wird die Erfindung in einem Ausführungsbeispiel anhand der Figuren 1 und 2 näher erläutert. Es zeigt:
Figur 1: den schematischen Aufbau eines optischen Crossconnects und
Figur 2: den Aufbau des erfindungsgemäßen Crossconnects.

In Figur 1 ist das übliche Design eines Crossconnects OCX dargestellt. Er enthält eine Anzahl von optischen Eingangs/Ausgangs-Anschlüssen I/O, die alle mit einer Schaltmatrix S verbunden sind. Die Schaltmatrix S kann dadurch jeden Eingang auf jeden beliebigen Ausgang schalten. Bei bekannten 4/3/1 Crossconnects für SDH ist die Matrix eine Raum/Zeit-Schaltmatrix, die beliebige Multiplexeinheiten bis zur niedrigsten Multiplexebene von beliebigen Eingängen auf beliebige Ausgänge schalten kann. Bei bekannten optischen Crossconnects ist die Schaltmatrix eine für beliebige Signalformate transparente Raum-Schaltmatrix. Es können dabei jedoch nur gleichartige Eingänge auf gleichartige Ausgänge geschaltet werden. So würde es keinen Sinn machen, einen ATM-Eingang auf einen STM-64 Ausgang zu schalten und umgekehrt.

Entsprechend der Erfindung sind die Eingangs/Ausgangs-Anschlüsse I/O für Nachrichtensignale gemäß der Definition der Optical Channels (OCh) ausgelegt. Diese bauen auf einer Basisbitrate von 2,66 Gbit/sec auf, wobei höhere Multiplexebenen jeweils die vierfache Bitrate der Basisbitrate aufweisen. Nachrichtensignale einer höheren Multiplexebene werden durch byteweises verschachteln von vier Nachrichtensignalen der jeweils nächst niedrigeren Multiplexebene gebildet oder enthalten direkt ein Nutzdatensignal. Beim Multiplexen von Nachrichtensignalen einer niedrigeren Multiplexebene zu einem Nachrichtensignal einer nächst höheren Multiplexebene wird byteweise gestopft, um Frequenzunterschiede der Teilsignale auszugleichen. Bislang sind zwei höhere Multiplexebenen vorgesehen mit Bitraten von 10,7x Gbit/sec und 43,x Gbit/sec. Die genaue Bitrate ist noch nicht endgültig festgelegt, so daß die Bitraten an der jeweils letzten gültigen Stelle mit x bezeichnet sind. Es ist davon auszugehen, daß zukünftig noch weitere, höhere Multiplexebenen festgelegt werden.

Ein Grundgedanke der Erfindung besteht darin, eine Raum-Schaltmatrix zu verwenden, an die ein Multiplexer angeschlossen ist. Nachrichtensignale, die zu einem Ausgang derselben Multiplexebene geschaltet werden sollen, werden direkt von der Schaltmatrix auf den betreffenden Ausgang geschaltet, während Nachrichtensignale, die zu einem Ausgang einer niedrigeren oder höheren Multiplexebene geschaltet werden sollen, zunächst von der Schaltmatrix an den Multiplexer geschaltet werden, wo sie gemultiplext bzw. gedemultiplext werden, dann wieder der Schaltmatrix zugeführt werden, welche die gemultiplexten bzw. entmultiplexten Nachrichtensignale dann dem betreffenden Eingang zuschaltet. Die Multiplexer dienen also dem Zusammenspiel zwischen den Multiplexebenen.

Ein solcher Crossconnect ist in Figur 2 dargestellt. Er weist eine Reihe von Eingangs/Ausgangs-Anschlüssen I/O für optische Nachrichtensignale unterschiedlicher Multiplexebenen auf. Die Anschlüsse I/O sind alle mit der Raum-Schaltmatrix S verbunden. Ebenfalls mit der Raum-Schaltmatrix S sind zwei Multiplexer MUX verbunden. Einer der Multiplexer ist zum Multiplexen und entsprechenden Demultiplexen von Nachrichtensignalen der untersten Multiplexebene in Nachrichtensignale der zweiten, mittleren Multiplexebene vorgesehen. Der andere Multiplexer ist zum Multiplexen und entsprechenden Demultiplexen von Nachrichtensignalen der zweiten Multiplexebene in Nachrichtensignale der höchsten Multiplexebene vorgesehen. Beide Multiplexer weisen jeweils vier Anschlüsse für Nachrichtensignale der jeweils niedrigeren Multiplexebene auf sowie einen Anschluß für Nachrichtensignale der höheren Multiplexebene. Alle fünf dieser Anschlüsse sind mit Anschlüssen der Raum-Schaltmatrix S verbunden.

Die Eingangs/Ausgangs-Anschlüsse I/O des Crossconnects lassen sich in drei Gruppen unterteilen: eine erste Gruppe von Anschlüssen IO1 für Nachrichtensignale der untersten Multiplexebene mit einer Bitrate von 2,66 Gbit/sec, eine zweite Gruppe von Anschlüssen IO2 für Nachrichtensignale der zweiten Multiplexebene mit einer Bitrate von 10,7x Gbit/sec sowie eine dritte Gruppe von Anschlüssen für Nachrichtensignale der höchsten Multiplexebene mit einer Bitrate von 43,x Gbit/sec.

Die Funktion des Crossconnects ist folgende: Die Schaltmatrix schaltet auf allen Multiplexebenen Verbindungen von beliebigen Eingängen zu beliebigen Ausgängen. Der Schaltzustand der Matrix wird dabei von einer nicht gezeigten Steuerungseinrichtung über ein Netzwerkmanagementsystem bestimmt.

An den Anschlüssen der ersten Gruppe IO1 werden Nachrichtensignale mit einer Bitrate von 2,66 Gbit/sec empfangen. Soll ein Nachrichtensignal von einem solchen Anschluß auf einen gleichartigen Anschluß derselben Gruppe IO1 geschaltet werden, so schaltet die Schaltmatrix dieses Nachrichtensignal direkt auf den betreffenden Anschluß. Ebenso werden Nachrichtensignale an den Anschlüssen der Gruppen IO2 und IO3 direkt zu den betreffenden Ausgängen geschaltet, wenn diese derselben Gruppe angehören. Anderenfalls muß eine Umsetzung in einem der Multiplexer MUX erfolgen.

Es wird nun beispielhaft der Fall angenommen, daß ein Nachrichtensignal der untersten Multiplexebene (2,66 Gbit/sec) von einem Anschluß der ersten Gruppe IO1 zu einem Anschluß der zweiten Gruppe IO2 geschaltet werden soll. Dazu wird das 2,66 Gbit/sec Nachrichtensignal von der Schaltmatrix zu dem unteren der beiden gezeigten Multiplexer MUX geschaltet. Wie bereits erwähnt hat der Multiplexer MUX vier Anschlüsse für Nachrichtensignale der untersten Multiplexebene und einen Anschluß für Signale der mittleren Multiplexebene. Der Multiplexer verschachtelt die an den vier Anschlüssen der untersten Multiplexebene empfangenen Nachrichtensignale byteweise zu einem Nachrichtensignal der mittleren Multiplexebene und leitet dieses zurück an die Schaltmatrix S. Dieses verschachtelte Nachrichtensignal wird dann von der Schaltmatrix S zu dem betreffenden Ausgang der mittleren Multiplexebene geschaltet. Ist das beispielhaft beschriebene 2,66 Gbit/sec Nachrichtensignal das einzige Nachrichtensignal, welches auf den betreffenden Ausgang geschaltet werden soll, so verschachtelt der Multiplexer dieses mit drei Leersignalen um das Nachrichtensignal der mittleren Multiplexebene zu bilden.

Alle Schaltzustände der Matrix und die Arbeitsweise der Multiplexer sind bidirektional. So kann beispielweise auch ein Nachrichtensignal von einem Anschluß der mittleren Multiplexebene über die Schaltmatrix S zu dem entsprechenden Anschluß des unteren Multiplexers MUX geschaltet werden. Dieser demultiplext das Signal in vier Nachrichtensignale der untersten Multiplexebene und leitet diese an die Schaltmatrix S zurück. Die Schaltmatrix S schaltet diese vier Nachrichtensignale dann zu vier verschiedenen Anschlüssen der ersten Gruppe IO1.

Soll ein Nachrichtensignal der untersten Multiplexebene von einem Anschluß der ersten Gruppe IO1 zu einem Anschluß der dritten Gruppe IO3 geschaltet werden, so wird es von der Schaltmatrix zunächst zu dem unteren Multiplexer MUX geschaltet: Dieser bildet dann mit drei weiteren Nachrichtensignalen oder eventuell auch mit Leersignalen ein Nachrichtensignal der mittleren Multiplexebene, das dann an die Schaltmatrix S zurückgeleitet wird. Die Schaltmatrix S schaltet des gemultiplexte Nachrichtensignal der mittleren Multiplexebene dann zu dem oberen Multiplexer, der daraus wiederum mit drei weiteren Nachrichtensignalen der mittleren Multiplexebene oder gegebenenfalls mit Leersignalen ein Nachrichtensignal der höchsten Multiplexebene bildet, indem er die vier Signale byteweise verschachtelt. Das so gebildete Nachrichtensignal der höchsten Multiplexebene wird dann von der Schaltmatrix S auf den betreffenden Ausgang der dritten Gruppe geschaltet.

Die Schaltmatrix kann entweder als elektrische Schaltmatrix oder auch als optische Schaltmatrix ausgeführt werden. Im Falle einer elektrischen Schaltmatrix ist diese vorteilhaft für parallele Signalverarbeitung ausgelegt, d.h. sie enthält beispielweise acht parallele Pfade für die acht Bits eines jeden Bytes der zu schaltenden Nachrichtensignale. Dies ist erforderlich, daß sich mit den derzeit modernsten auf Basis von SiGe-Technologie hergestellten integrierten Halbleiterschaltungen Schaltmatrizen für maximal 20 Gbit/sec aufbauen lassen. Eine optische Schaltmatrix kann beispielsweise unter Verwendung kleiner Spiegel sogenannter Micro-Mirrors aufgebaut werden.
Für die Nachrichtensignale aller Multiplexebenen ist die Schaltmatrix vorzugsweise transparent.

Die Verwendung von zwei Multiplexern soll keine Beschränkung für die Erfundg darstellen. Vielmehr können auch mehrere gleichartige Multiplexer gleichzeitig an die Schaltmatrix S angeschlossen sein. Dies ist bei großen Schaltmatrizen mit einer Schaltkapazität von mehreren Dutzend Nachrichtensignalen vorteilhaft, damit gleichzeitig mehrere Vierergruppen von Anschlüssen einer unteren Multiplexebene mit Anschlüssen einer höheren Multiplexebene verbunden werden können.

Vorteilhaft ist der erfindungsgemäße Crossconnect modular in Form von Steckkarten aufgebaut. Dadurch kann er flexibel erweitert werden, z.B. durch hinzufügen weiterer Multiplexer-Steckkarten und Matrixsteckkarten.

## Patentansprüche

1. Optischer Crossconnect (OCX) zum Schalten von Verbindungen in einem optischen Übertragungsnetz, in dem optische Nachrichtensignale unterschiedlicher Multiplexebenen mit jeweils festgelegter Bitrate gesendet werden können, wobei Nachrichtensignale einer höheren Multiplexebene aus Nachrichtensignalen einer niedrigeren Multiplexebene zusammengesetzt sind oder direkt ein Nutzdatensignal enthalten; der Crossconnect enthält:
- eine Anzahl von Eingangs/Ausgangs-Anschlüssen (I/O) die jeweils angepaßt sind, Nachrichtensignale einer bestimmten Multiplexebene zu senden und zu empfangen, und
- eine mit den Eingangs/Ausgangs-Anschlüssen (I/O) verbundene Schaltmatrix (S),
**dadurch gekennzeichnet, daß**
die Schaltmatrix S eine Raumschaltmatrix ist und daß zumindest ein ebenfalls mit der Schaltmatrix (S) verbundenen Multiplexer (MUX) vorgesehen ist, der angepaßt ist, eine Anzahl von der Schaltmatrix (S) empfangener Nachrichtensignale einer niedrigeren Multiplexebene zu einem Nachrichtensignal einer höheren Multiplexebene zu multiplexen und dieses an die Schaltmatrix (S) zurückzuleiten, sowie ein von der Schaltmatrix (S) empfangenes Nachrichtensignal einer höheren Multiplexebene in eine Anzahl Nachrichtensignale einer niedrigeren Multiplexebene zu demultiplexen und diese einzeln an die Schaltmatrix (S) zurückzuleiten.

2. Optischer Crossconnect (OCX) nach Anspruch 1, bei dem die Schaltmatrix eine transparente Raumschaltmatrix ist.

3. Optischer Crossconnect (OCX) nach Anspruch 2, bei dem die Schaltmatrix eine optische Raumschaltmatrix ist.

4. Optischer Crossconnect (OCX) nach Anspruch 2, bei dem die Schaltmatrix eine elektrische Raumschaltmatrix ist.

5. Optischer Crossconnect (OCX) nach Anspruch 1, bei dem jeweils Anschlüsse für eine niedrigsten Hierarchieebene mit einer Bitrate von 2,66 Gbit/sec und zwei höhere Hierarchieebenen mit jeweils einem Vierfachen der Bitrate der nächst niedrigen Hierarchieebene vorgesehen sind und bei dem zwei Multiplexer an die Schaltmatrix angeschlossen sind, wobei der erste Multiplexer angepaßt ist vier Nachrichtensignale der niedrigsten Hierarchieebene zu einem Nachrichtensignal der mittleren Hierarchieebene zu multiplexen und umgekehrt und wobei der zweite Multiplexer angepaßt ist vier Nachrichtensignale der mittleren Hierarchieebene zu einem Nachrichtensignal der höchsten Hierarchieebene zu multiplexen und umgekehrt.

6. Optischer Crossconnect (OCX) nach Anspruch 1, bei dem die Baugruppen modular in Form von Steckkarten ausgeführt sind.

7. Verfahren zum Schalten von optische Nachrichtensignale unterschiedlicher Multiplexebenen mit jeweils festgelegter Bitrate, wobei Nachrichtensignale einer höheren Multiplexebene aus Nachrichtensignalen einer niedrigeren Multiplexebene zusammengesetzt sind oder direkt ein Nutzdatensignal enthalten, mit den Schritten:
- Empfangen eine optischen Nachrichtensignal;
- Zuleiten des Nachrichtensignals an eine Schaltmatrix;
- Feststellen der Hierarchieebene des Nachrichtensignals;
- Feststellen zu welchem Ausgang das Nachrichtensignal geschaltet werden soll;
- für den Fall, daß das Nachrichtensignal zu einem Ausgang geschaltet werden soll, der dieselbe Hierarchieebene unterstützt, Schalten des Nachrichtensignals zu dem betreffenden Ausgang und
- für den Fall, daß das Nachrichtensignal zu einem Ausgang geschaltet werden soll, der eine höhere Hierarchieebene unterstützt,
- Schalten des Nachrichtensignals zu einem Multiplexer;
- Multiplexen des Nachrichtensignals zu einem Nachrichtensignal der höheren Hierarchieebene
- Zurückleiten des gemultiplexten Nachrichtensignals an die Schaltmatrix und
- Schalten des Nachrichtensignals zu dem betreffenden Ausgang; und
- für den Fall, daß das Nachrichtensignal zu einem Ausgang geschaltet werden soll, der eine niedrigere Hierarchieebene unterstützt,
- Schalten des Nachrichtensignals zu dem Multiplexer;
- Demultiplexen des Nachrichtensignals zu Nachrichtensignalen der niedrigeren Hierarchieebene
- Zurückleiten der demultiplexten Nachrichtensignale an die Schaltmatrix und
- Schalten eines der demultiplexten Nachrichtensignale zu dem betreffenden Ausgang.
